**Europäisches Patentamt**

**European Patent Office**

**Office européen des brevets**

(19)

(11) Veröffentlichungsnummer: **0 008 712**
**A1**

(12) # EUROPÄISCHE PATENTANMELDUNG

(21) Anmeldenummer: **79102959.8**

(22) Anmeldetag: **14.08.79**

(51) Int. Cl.³: **B 29 B 1/06**

(30) Priorität: **28.08.78 DE 2837435**

(43) Veröffentlichungstag der Anmeldung:
**19.03.80 Patentblatt 80/6**

(84) Benannte Vertragsstaaten:
**AT FR GB IT**

(71) Anmelder: **Papenmeier, Friedrich Horst**
**Talweg 2**
**D-5840 Schwerte 1(DE)**

(72) Erfinder: **Papenmeier, Friedrich Horst**
**Talweg 2**
**D-5840 Schwerte 1(DE)**

(74) Vertreter: **Müller-Börner, Richard, Dipl.-Ing. et al,**
**PATENTANWALTE MÜLLER - BÖRNER WEY & KÖRNER**
**WIDENMAYERSTRASSE 49**
**D-8000 München 22(DE)**

(54) Verfahren und Vorrichtung zum Aufbereiten von PVC-Pulver.

(57) Die Erfindung bezieht sich auf ein Verfahren zur Aufbereitung von PVC-Pulver und Verarbeitung desselben zu Kunststoff-Produkten, das materialschonend und energiesparend arbeitet. Das mit Zuschlagstoffen versehene PVC-Pulver wird zunächst sehr schnell durch Friktionswärme auf eine Temperatur zwischen 340° K und 420° K aufgeheizt und dann ohne Zwischenabkühlung nur durch thermische Energie auf eine Temperatur weiter aufgeheizt, bei welcher das Mischgut gerade noch rieselfähig ist. Dann wird es sofort der Weiterverarbeitung zugeführt. Weiterhin gibt die Erfindung eine Vorrichtung zur Durchführung des Verfahrens an.

EP 0 008 712 A1

PATENTANWÄLTE

*Müller-Börner & Wey*

0008712

D-8 MÜNCHEN 22 · WIDENMAYERSTRASSE 49

D-1 BERLIN-DAHLEM 33 · PODBIELSKIALLEE 68

BERLIN:    DIPL.-ING. R. MÜLLER-BÖRNER

MÜNCHEN:   DIPL.-ING. HANS-HEINRICH WEY
           DIPL.-ING. EKKEHARD KÖRNER

Friedrich Horst Papenmeier

## Verfahren und Vorrichtung zum Aufbereiten von PVC-Pulver

Verfahren zur kontinuierlichen Aufbereitung von rieselfähigem, insbesondere thermoplastisch verformbarem, temperiertem Gut, insbesondere PVC-Pulvergemisch, zur sogenannten Heißbeschickung von Verarbeitungsmaschinen sind bekannt. Zweck und Ziel dieser bekannten Verfahren sind, die einmal in das Gut während der Aufbereitung zu einem dry blend oder Agglomerat eingebrachte Wärmeenergie durch die sofort anschließende Weiterverarbeitung möglichst verlustlos zu nutzen.

MÜNCHEN: TELEFON (089) 225585
KABEL: PROPINDUS · TELEX 0524244

BERLIN:  TELEFON (030) 8312088
KABEL: PROPINDUS · TELEX 0184057

Bei den heute am meisten gebräuchlichen Verfahren dieser Art erfolgt das Aufheizen des Mischgutes auf die erforderliche Aufbereitungsendtemperatur während des Mischprozesses fast ausschließlich durch die über ein schnellaufendes Mischwerkzeug in das Mischgut eingebrachte mechanische Energie in dem sogenannten Heizmischer oder Turbomischer. Es sind aber auch Verfahren bekannt, bei denen der Heizmischer langsam laufende Mischwerkzeuge aufweist, über die nur ca. ein Drittel der Wärmemenge über mechanische Energie in das Mischgut gelangt, der Rest wird als thermische Energie über die beheizte Mischerwand in das Mischgut eingeleitet. Diesem Mischer nachgeschaltet ist bei diesen bekannten Verfahren ein sogenannter Warmhaltemischer mit zusätzlichen Wärmeaustauschflächen in Form von heizbaren Wendeln, Ringen oder Ringsegmenten. In diesem Temperier- bzw. Warmhaltemischer dreht sich ein sehr langsam laufendes Mischwerkzeug, welches das Mischgut an den Behälterinnenflächen bzw. den Einbauten vorbeibewegt, dieses ständig umschichtet und dadurch auf der Einlauf-Temperatur hält. Der Auslauf dieses Warmhaltemischers ist mit einer Förderschnecke versehen, welche das aufgeheizte Gut in die Weiterverarbeitungsmaschine fördert.

Ein anderes bekanntes Verfahren verwendet drei annähernd gleiche Schnellmischer, die je ein schnellaufendes Mischwerkzeug, je einen Einlauf in der Deckelmitte und je einen Auslauf an dem Behälterrand haben und treppenförmig zusammengebaut sind (DE-PS 17 78 436). Das kontinuierlich in den ersten Mischer eindosierte Gut wird auch hier durch Friktionswärme erwärmt. Die wärmeren Gutteilchen sollen im fluidisierten Gut nach oben steigen und durch den Auslauf in die Mitte des nächsten Mischers fallen. Dieser Vorgang wiederholt sich in den anderen Mischern. An den Auslauf des letzten Mischers ist eine Dosierschnecke angeschlossen, die das so in Stufen erwärmte Gut in die Weiterverarbeitungsmaschine fördert.

Die Nachteile dieser bekannten Verfahren sind, daß das Einbringen der Wärme durch Friktion in das Schüttgut verhältnismäßig unwirtschaftlich ist und daß manche Rohmaterialien eine so heftige Behandlung über längere Zeit nicht schadlos vertragen. Ein sehr wesentlicher Nachteil ist ferner, daß sich innerhalb des Gutes keine besonders gleichmäßige Temperaturverteilung erreichen läßt. Eine solche ist jedoch zur Erzielung einer hohen Qualität im aus diesem Rohmaterial hergestellten Produkt in den meisten Fällen unerläßlich. So ist es beispielsweise erforderlich, bei PVC die Verarbeitungstemperatur beim Extrudieren im Bereich von $458^{\circ}$ K um $\pm 1^{\circ}$ konstant zu halten, um die maximale Kerbschlagzähigkeit zu erreichen. Mit den bekannten Aufbereitungsverfahren läßt sich innerhalb des Gutes keine so gleichmäßige Temperaturhomogenität erreichen, daß beim Extrudieren der vorerwähnte Temperaturbereich immer eingehalten werden kann. Dies ist der Grund, weshalb sich die vorbeschriebenen Aufbereitungsverfahren in der Praxis nicht durchgesetzt haben. Eine durch langandauerndes Umwälzen des Gutes etwa erzielbare Homogenisierung scheidet in der Praxis aus, da sich PVC wirtschaftlich nur relativ kurze Zeit bei hohen Temperaturen stabil halten läßt.

Man ist daher dazu übergegangen, das zu dry blend aufbereitete PVC wieder auf Raumtemperatur abzukühlen und das Gut dann ohne Vorwärmung der weiteren Verarbeitung zuzuführen. Dann muß jedoch beispielsweise ein Extruder so gestaltet sein, daß allein er die Wiedererwärmung des Gutes auf die zum Extrudieren erforderliche Temperatur übernimmt. Ein solcher Extruder ist relativ lang und muß eine relativ schwere Bauart aufweisen. Entsprechende Überlegungen gelten für Kalander und andere Verarbeitungsmaschinen. Das beschriebene Abkühlen muß wegen der begrenzten Zeitdauer, die PVC im heißen Zustand stabil übersteht, schnell vor sich gehen, erfordert somit den Einsatz spezieller Vorrichtungen.

Neuerdings ist wieder diskutiert worden, beim Extrudieren dem Extruder ein wieder vorgewärmtes Rohmaterial zuzuführen. Es liegt auf der Hand, daß sich hierbei das Problem der Temperaturhomogenität neu stellt, die maximale Wärmebehandlungszeitdauer zu beachten ist und das Verfahren ziemlich energieverschwenderisch ist.

Der Erfindung liegt die Aufgabe zugrunde, ein Verfahren nach dem Oberbegriff des Patentanspruchs 1 anzugeben, mit dessen Hilfe es möglich ist, PVC bei verbesserter Wirtschaftlichkeit hinsichtlich Material-, Energie- und Apparateeinsatzes zu Produkten hoher Qualität zu verarbeiten.

Diese Aufgabe wird durch die kennzeichnenden Merkmale des Patentanspruchs 1 gelöst. Weiterbildungen der Erfindung sowie eine Vorrichtung zur Durchführung des erfindungsgemäßen Verfahrens sind Gegenstand der Unteransprüche.

Die Erfindung geht von der Erkenntnis aus, daß es zur Vergrößerung der Schüttdichte von PVC-Pulver an sich nur notwendig ist, ein Gemenge aus PVC-Pulver und Wachsen, die man dem PVC-Pulver stets beigibt, so weit zu erwärmen, daß das Wachs schmilzt, so daß es sich um die PVC-Körner legen kann und diese miteinander sowie mit den übrigen Zuschlagstoffen verklebt. Es ist nicht notwendig, das PVC bis zu seiner Erweichungstemperatur zu erwärmen. Weiterhin geht die Erfindung von der Forderung aus, daß die Gesamtaufbereitungszeit bis zur Erzielung einer homogenen Temperaturverteilung so kurz ist, daß ein Zusatz von Stabilisatoren auf ein wirtschaftliches Höchstmaß beschränkt werden kann. Durch die Einbringung mechanischer Energie wird das Gut nur so lange erwärmt, wie die dadurch gebildeten Sinterungen noch nicht durch die mechanische Belastung wieder zerstört werden. Durch die Schnellaufheizung durch Einbringung mechanischer Energie läßt sich ein erheblicher Zeitgewinn erzielen, der sich in einer Reduktion des Stabilisatorbedarfs äußert. Anschließend erfolgt die weitere Erwärmung bei gleichzeitiger Homogenisierung der Temperaturverteilung durch vorsichtige Umschichtung des Gutes ausschließlich durch Einbringung thermischer Energie, wobei man durch entsprechende Gestaltung der dazu verwendeten Vorrichtungen mit der Temperatur bis an die Grenze der Rieselfähigkeit des Gutes geht. Dazu sind beispielsweise bestimmte maximale Schütthöhen einzuhalten, damit das Gut nicht unter dem Druck des Eigengewichts zusammenbäckt. Das Gut ist dann so weit erhitzt, daß ein geringer Druck ausreicht, um es zu plastifizieren. Ein Extruder braucht dann nur noch eine kurze Baulänge aufzuweisen. Da das Gut mit relativ hoher Temperatur zugeführt wird, kann erwartet werden, daß beim Extrudieren selbst keine Dämpfe aus dem Gut, etwa Wasserdampf oder Monomere, freigesetzt werden. Aus diesem und dem oben genannten Grund kann der Extruder leichter gebaut sein, was es ermöglicht, seine Temperatur schnell ansprechend von außen zu beeinflussen, beispielsweise um ihn nach Betriebsunterbrechungen schnell wieder auf Solltemperatur zu bringen. Ein solcher Extruder weist auch eine lange Lebensdauer auf, weil das in ihn eingefüllte Agglomerat schnell schmilzt und den Extruder schmiert.

In der Praxis kommen für die Erwärmung von PVC im Schnellmischer Endtemperaturen zwischen 340° K und 420° K infrage, die zweite Erwärmungsstufe bringt dann die restliche Erwärmung und zugleich die Homogenisierung der Temperaturverteilung. Das Wiederabkühlen des Gutes entfällt.

Ein weiterer Vorteil der Erfindung ist es, daß die an der Durchführung der Aufbereitung und Verarbeitung des PVC teilnehmenden Vorrichtungen mehr nach ihrer eigentlichen Aufgabe hin dimensioniert werden können, weil sie keine anderen Aufgaben zu übernehmen brauchen. So kann ein Schnellmischer, dessen Hauptaufgabe es ist, das PVC-Pulver schnell zu erwärmen und die Wachse und gegebenenfalls andere Zuschlagstoffe im PVC-Pulver zu verteilen, mehr in Richtung auf diese Aufgabe unter Vernachlässigung von Homogenisierungsproblemen dimensioniert werden. Während der zweiten Erwärmungsstufe braucht die dazu eingesetzte Vorrichtung keine intensive Durchmischung mehr zu besorgen, sie muß lediglich Temperatur in das Gut einbringen und durch Umschichtung des Gutes die Temperatur im Gut gleichmäßig verteilen. Ein etwa nachgeschalteter Extruder braucht nicht mehr wesentlich zu erwärmen, sondern muß vorwiegend nur noch extrudieren. Insgesamt gesehen werden daher die einzelnen Vorrichtungen weniger komplex.

Ein weiterer Vorteil des erfindungsgemäßen Verfahrens liegt darin, daß der Schnellmischer relativ schnell wieder für neue Chargen frei wird bzw. relativ klein dimensioniert werden kann. Weiterhin ist von Vorteil, daß kein Lagerungssilo für dry blend benötigt wird. Der apparative Aufwand unter Berücksichtigung der Temperiertrommel ist nicht größer als der unter Berücksichtigung eines Kühlmischers. Außerdem kann eine spezielle Dosiervorrichtung entfallen, da die Trommel selbst als Dosiereinrichtung verwendet werden kann.

Die Erfindung soll nachfolgend unter Bezugnahme auf die
Zeichnungen an einem Ausführungsbeispiel für eine Vorrichtung zur Durchführung des Verfahrens näher erläutert
werden. Es zeigt:

Fig. 1    eine Vorrichtung zur Durchführung des Verfahrens;

Fig. 2    die Heiztrommel aus der Vorrichtung nach Fig. 1
          im Längsschnitt;

Fig. 3    die Heiztrommel von Fig. 2 von der Einlaufseite
          her gesehen, teilweise im Schnitt;

Fig. 4    das Drehrohr mit Antrieb von der Seite, teilweise weggebrochen, und

Fig. 5    das Drehrohr nach Fig. 4 von der Einlaufseite
          her gesehen.

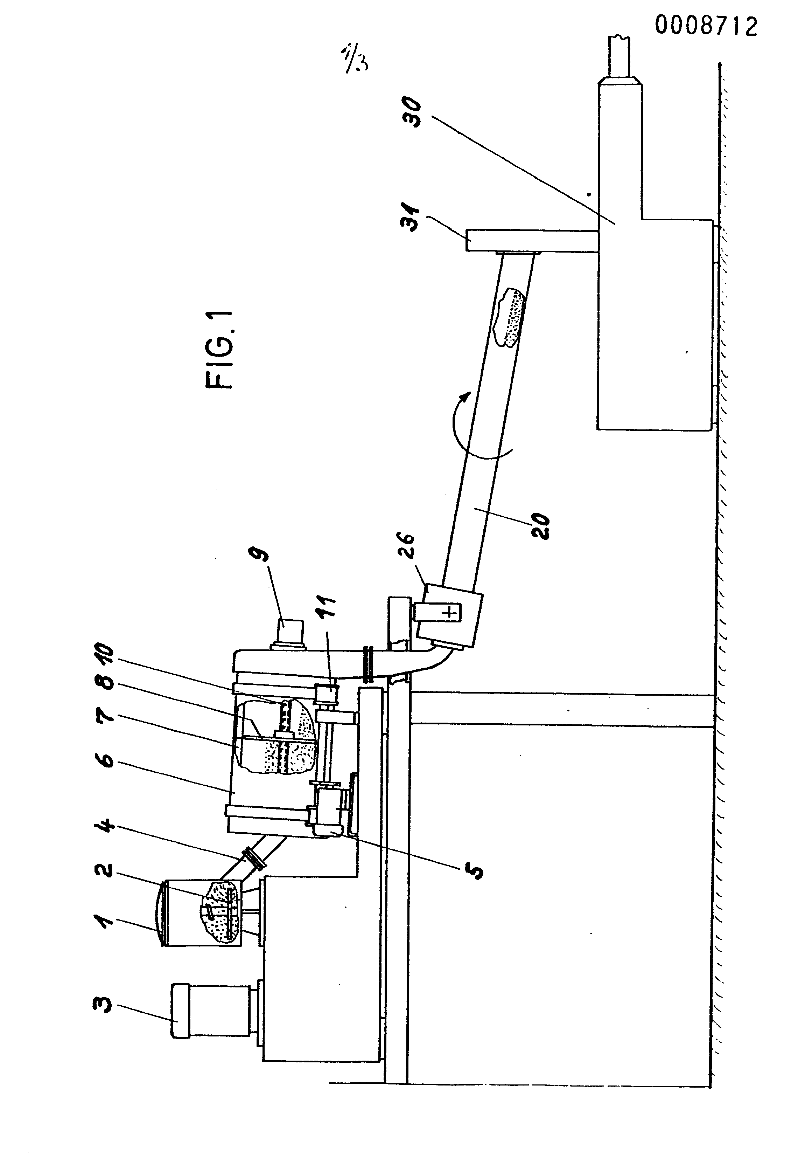

Die Vorrichtung nach Fig. 1 besteht aus einem Schnellmischer 1 mit schnellumlaufendem Mischwerkzeug 2, das von
einem Motor 3 angetrieben ist, aus einer liegend angeordneten Heiztrommel 6, die von einem Motor 5 in Drehung versetzt ist, und einem rotierenden Dosierrohr 20, welches
ebenfalls temperiert ist. Der Ausgang des Dosierrohres 20
ist mit dem Einfüllschacht 31 einer Kunststoffverarbeitungsmaschine, hier beispielsweise einem Extruder 30, verbunden.

Der Ausgang des Schnellmischers ist über eine Verbindungsleitung 4 mit dem Eingang der Heiztrommel 6 verbunden.
Deren Ausgang mündet in den Eingang des Dosierrohres 20.

Die Heiztrommel 6 erfüllt gleichzeitig verschiedene Aufgaben. Sie ist Heizvorrichtung und Vorrichtung zum Homogenisieren der Temperaturverteilung in dem zu ihrem Auslaß gelangenden Schüttgut. Weiterhin ist sie ein Puffer, der aus dem chargenweisen Zulauf vom Schnellmischer 1 eine kontinuierliche Abgabe des aufbereiteten Gutes erzeugt, wie es für nachgeschaltete Verarbeitungsmaschinen, insbesondere Extruder, erforderlich ist.

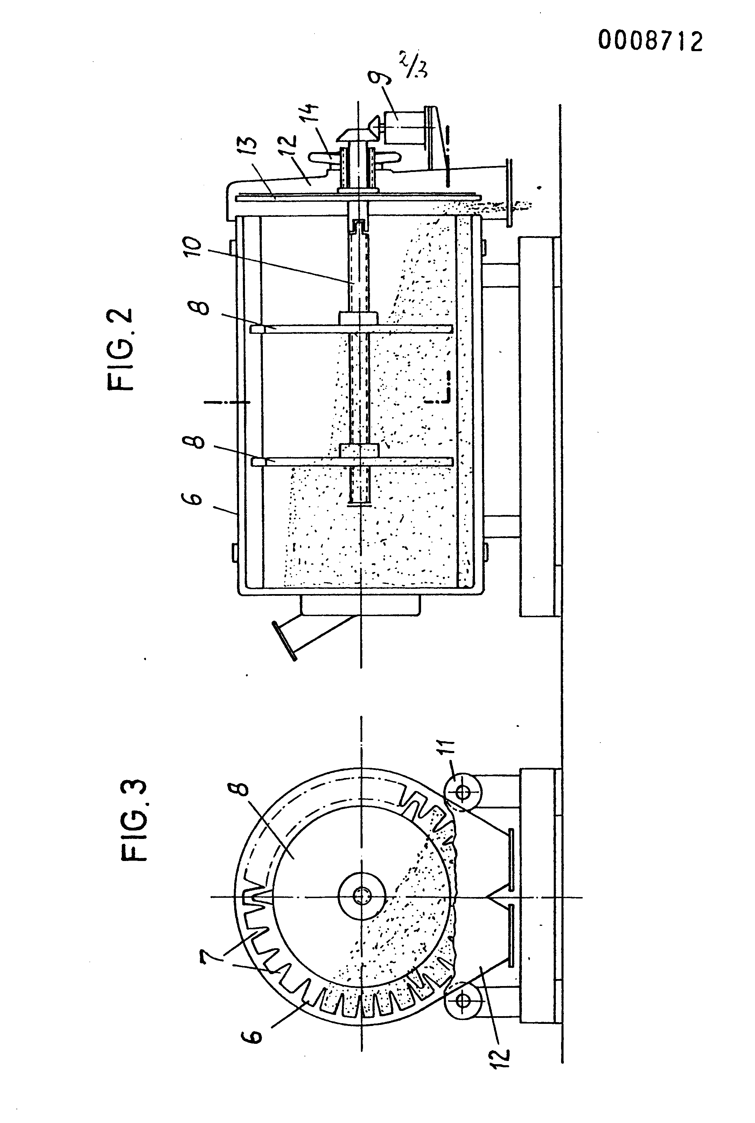

Wie insbesondere aus den Figuren 1 und 3 hervorgeht, ist die Trommel 6 auf Tragrollen 11 drehbar gelagert. Die Trommel ist im Niveau unterhalb des Schnellmischers 1 angeordnet, so daß das von letzterem abgegebene Agglomerat durch Schwerkraftwirkung in die Trommel 6 gelangen kann. Die Zuführung in die Trommel 6 erfolgt in deren Achse. Am anderen Ende der Trommel 6 ist in einer Deckelhaube 12 ein Deckel 13 angeordnet, der mittels eines Handrades 14 gegenüber der Trommel im Abstand verstellbar ist, so daß sich zwischen der Trommel 6 und diesem Deckel 13 ein Spalt veränderbarer Weite ergibt. Die Deckelhaube 12 ist, wie Fig. 3 zeigt, mit zwei Auslässen versehen.

Wie Fig. 3 auch erkennen läßt, ist die Trommel 6 an ihrer Innenseite mit Rippen 7 versehen, die das Agglomerat besser mitnehmen und dem Agglomerat größere Temperierflächen anbieten. Die Trommel selbst ist von außen her durch Umspülen beheizt oder ihre Wandung ist von Heizelementen durchzogen, was jedoch hier aus Übersichtlichkeitsgründen nicht dargestellt ist. Der Trommelinnenraum ist gemäß den Figuren 1 und 2 durch Stauscheiben 8 unterteilt, die bis dicht an die Trommelinnenwand reichen und mit dieser einen ringförmigen Spalt einschließen. Diese Stauscheiben 8 sind auf Gewindemuffen befestigt, die auf einer Gewindespindel 10 geführt sind, die mittels eines Verstellantriebes 9 gegenüber der Trommel 6 drehbar ist, um die Stauscheiben 8 axial zu verstellen. Als Drehsicherung der Stauscheiben 8 gegenüber der Trommel 6 dienen Nasen, die in die Zwischenräume zwischen benachbarten Rippen 7 der Trommel 6 eingreifen.

An jeden der Ausläufe der Trommel 6 ist ein Dosierrohr 20 angeschlossen, von denen eines in Fig. 1 erkennbar ist. Dieses Dosierrohr 20 ist leicht geneigt angeordnet und in Rotation gesetzt, so daß das in ihm befindliche Agglomerat unter der Wirkung der Schwerkraft zum Auslauf des Dosierrohres 20 fortbewegt wird. Im Dosierrohr 20 sind keinerlei Einbauten vorhanden, von einer einlaufseitigen Einzugsvorrichtung gegebenenfalls abgesehen.

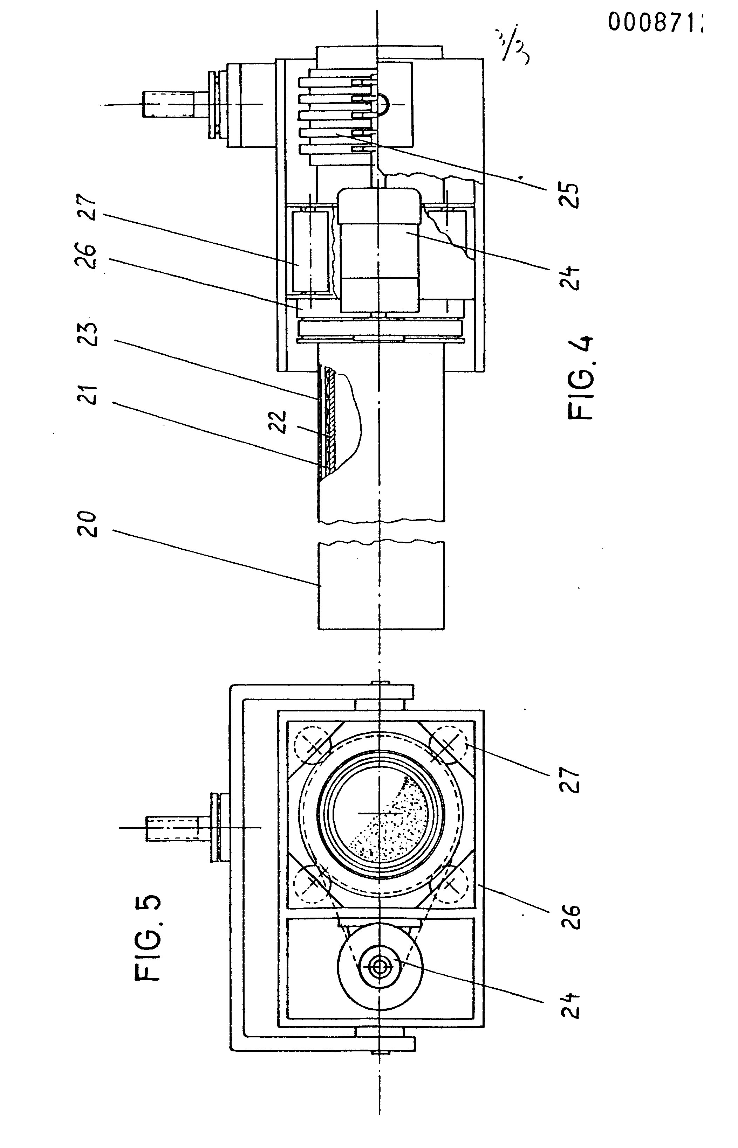

Gemäß Fig. 4 ist das Dosierrohr ein relativ dünnwandiger Körper, in dessen Wandung elektrische Heizdrähte 21 eingebettet sind, die gegen das Rohrinnere hin von einer Schutzschicht 22 abgedeckt und gegen übermäßigen Wärmeverlust zur Rohrwand hin durch eine Isolierzwischenlage 23 geschützt sind. Das Dosierrohr 20 ist von einem Elektromotor 24 in Drehung versetzt. Schleifringe 25 dienen der Stromversorgung der elektrischen Heizdrähte 21. Der ganze Antrieb mit dem ihm benachbarten Rohrende ist in einem Rahmen 26 befestigt, der kardanisch im Maschinenrahmen aufgehängt ist. Auf diese Weise kann das Dosierrohr 20 ausgeschwenkt und beispielsweise auf eine andere Verarbeitungsmaschine umgeschwenkt werden. Rollen 27 dienen der Lagerung des Dosierrohres 20 innerhalb des Rahmens 26. Diese kardanische Aufhängung hat zugleich den Vorteil, daß bei entsprechend ausgeführter Lagerung des anderen Rohrendes das Dosierrohr als Dosierwaage herangezogen werden kann, indem beispielsweise am Rahmen 26 entsprechende Meßfühler angreifen.

Zur Einhaltung der an das aufbereitete PVC gestellten Temperaturbedingungen ist es günstig bzw. erforderlich, an der Trommel 6 und am Dosierrohr 20 entsprechende Temperaturmeßfühler anzuordnen, die mit einer Regeleinrichtung verbunden sind, mit deren Hilfe die Wärmezufuhr über die Trommel bzw. das Dosierrohr beeinflußt wird. Solche Meßfühler und die mit ihnen verbundene Steuereinrichtung sind bekannter Art und sind daher in den Zeichnungen nicht wiedergegeben und brauchen nicht näher erläutert zu werden.

Die beschriebene Vorrichtung arbeitet wie folgt. In den Schnellmischer wird eine Charge PVC-Pulver, die wenigstens auch ein Wachs enthält, eingegeben und der Schnellmischer in Betrieb gesetzt. Er versetzt die Charge in heftige Bewegung, vermengt dabei das Wachs mit dem PVC-Pulver und erwärmt den Mischerinhalt infolge der zwischen diesem und dem rotierenden Flügel auftretenden Reibung. Dieser Vorgang wird so lange aufrechterhalten, bis infolge des Schmelzens des Wachses sich die Körner des PVC-Pulvers mit einer Wachsschicht überzogen haben und infolge der Klebwirkung des Wachses zu mehr oder minder großen Agglomeraten zusammenbacken. Bei passender Gestaltung und Füllung des Schnellmischers kann dieser Vorgang in einer bis drei Minuten abgeschlossen sein. Diese Zeitdauer liegt somit erheblich unter der üblichen Behandlungsdauer von PVC-Pulver in einem sogenannten Schnell- oder Turbomischer.

Nach Öffnen eines entsprechenden Schiebers gelangt dann das agglomerierte Produkt in dem so vorgewärmten Zustand durch das Verbindungsrohr 4 hindurch in die sich drehende Heiztrommel 6, und zwar in die in Fig. 2 links liegende, durch eine Stauscheibe 8 abgeteilte Teilkammer. Das Agglomerat liegt an den Wänden und in den Taschen zwischen den Rippen 7 der Heiztrommel 6 satt an. Durch die Drehung der Trommel wird das Agglomerat fortwährend umgeschichtet, so daß sich eine gleichmäßige Verteilung der von den Wänden an das Agglomerat übergebenen Wärme im Agglomerat ergibt. Durch die Trommelbewegung drückt sich das Agglomerat allmählich durch den Spalt zwischen der Stauscheibe 8 und der Trommelwand in die nächstfolgende Teilkammer hinein, in der es weiter erwärmt wird. Eine Neigung der Trommel in Auslaßrichtung unterstützt diese Transportbewegung. Gleiches wiederholt sich an der rechtsliegenden Stauscheibe 8, die die mittlere Teilkammer der Trommel 6 von der rechten, auslaßseitigen Teilkammer abteilt. Durch die Stauscheiben wird erreicht, daß sich in den verschiedenen Teilkammern unterschiedliche Schütthöhen des Agglomerats ergeben, die dem Temperaturanstieg im Agglomerat vom Eingang zum Ausgang wenigstens annähernd Rechnung tragen, damit es nicht unter dem Einfluß des Eigengewichts zu Zusammenbackungen im Material kommen kann. Diese Stauscheiben machen es auch möglich, die Trommel 6 auch dann mit einer neuen Charge aus dem Schnellmischer 1 zu versehen, wenn die vorangehende Charge noch nicht vollständig die Trommel 6 verlassen hat. Die erste Teilkammer isoliert die frische Charge von den schon weitgehend temperaturhomogenen Anteilen der vorangehenden Charge.

Es sei betont, daß die Stauscheiben 8 während der Verarbeitung einer Charge gegebenenfalls längs der Trommelachse verschoben werden können, um beispielsweise der Befüllung der ersten Teilkammer mit einer neuen Charge Rechnung zu tragen und dort genügend Raum anbieten zu können. In diesem Falle wird die erste Teilkammer vor dem Einlassen der neuen Charge vergrößert und nach dem Einlassen der Charge allmählich wieder verkleinert, um in den nachfolgenden Chargen mehr Raum zu schaffen, um dort niedrigere Füllhöhen entsprechend der steigenden Temperatur im Schüttgut zu erhalten. Entsprechende Überlegungen gelten für die andere Stauscheibe.

Das von der Trommel 6 aufbereitete und kontinuierlich abgegebene PVC-Material gelangt durch den Auslaß in das Dosierrohr 20, in welchem seine Temperatur aufrechterhalten oder gegebenenfalls noch in gewissem Umfang gesteigert werden kann. In dem Dosierrohr 20 ist die Schütthöhe entsprechend der relativ hohen Temperatur des aufbereiteten PVC-Materials niedrig. Durch die relativ große Länge des Dosierrohres 20 gelingt es, an dessen Ausgang einen kontinuierlichen Materialfluß zu erzeugen, der an das Aufnahmevermögen einer nachfolgenden Verarbeitungsmaschine angepaßt ist. Durch die große Länge des Dosierrohres 20 ergibt sich auch eine weitestgehende Homogenisierung der Temperatur innerhalb des geförderten PVC-Materials. Durch eine Veränderung der Antriebsdrehzahl können Ungleichmäßigkeiten in der Schüttung ausgeglichen werden. Es versteht sich, daß der Bedarf an Material pro Zeiteinheit einer Verarbeitungsmaschine mit der durchschnittlichen Beschickung des Schnellmischers 1 in Einklang stehen muß und eine Drehzahlregelung der Antriebsmotoren 5 und 24 von Trommel 6 und Dosierrohr 20 nur einer Vergleichmäßigung der Schüttung am Ausgang des Dosierrohres 20 dienen kann.

Wie schon erwähnt, braucht das Dosierrohr 20 keinerlei Einbauten aufzuweisen, d.h. es kann innen vollkommen glatt sein, so daß es sehr leicht zu reinigen ist, was ein wesentlicher Vorteil ist, wenn es beispielsweise nach Betriebsstörungen einmal zu Anbackungen im Rohr kommen sollte. Entsprechende Überlegungen gelten für die Heiztrommel 6, aus der nach Abnehmen der Deckelhaube und des Deckels auch die Stauscheiben einfach axial herausgezogen werden können, so daß der Trommelinnenraum für Reinigungszwecke leicht zugänglich ist.

Durch das erfindungsgemäße Verfahren wird schon am Ausgang der Heiztrommel 6 eine Temperaturhomogenität im aufbereiteten PVC-Material erreicht, die es gestattet, unmittelbar an den Ausgang der Trommel 6 eine Verarbeitungsmaschine, beispielsweise einen Extruder, anzuschließen, d.h. auf den Einsatz eines Dosierrohres 20 zu verzichten. Das Dosierrohr 20 hat, wie zuvor erwähnt, in der Hauptsache die Aufgabe, zu einer weitgehenden Vergleichmäßigung der Schüttung zu gelangen, weil es eine zusätzliche Regelkomponente zur Verfügung stellt. Wo es darauf nicht zwingend ankommt, ist das Dosierrohr 20 daher verzichtbar.

0008712

Ansprüche

1. Verfahren zum Herstellen von Kunststoff-Produkten, insbesondere von stranggepreßten Produkten, aus mit Zuschlagstoffen versetztem PVC-Pulver, das in einer ersten Behandlungsstufe durch Friktionswärme erwärmt und in wenigstens einer weiteren Behandlungsstufe unter zunehmender Erwärmung weiter aufbereitet und das ohne Zwischenabkühlung einer das Produkt herstellenden Maschine, insbesondere Strangpreßmaschine, zugeführt wird, dadurch gekennzeichnet, daß dem zu behandelnden Gut in der ersten Behandlungsstufe kurzfristig soviel Friktionswärme zugeführt wird, daß es innerhalb einer Zeitspanne von bis zu etwa drei Minuten eine Temperatur zwischen $340^{\circ}$ K und $420^{\circ}$ K annimmt, daß das so behandelte und erwärmte Gut in der zweiten Behandlungsstufe unter Zuführung ausschließlich thermischer Energie unter ständigem Umschichten so weitererwärmt wird, daß sich im Gut eine gleichmäßige Temperatur solcher Höhe einstellt, bei der die Rieselfähigkeit gerade noch erhalten bleibt, und daß anschließend das Gut kontinuierlich der Weiterverarbeitung in an sich bekannter Weise zu dem gewünschten Produkt unterzogen wird.

2. Verfahren nach Anspruch 1, dadurch gekennzeichnet, daß während der Behandlung in der zweiten Stufe die Schütthöhe des Gutes so gesteuert wird, daß sich eine mit zunehmender Temperatur abnehmende Schütthöhe ergibt.

3. Verfahren nach Anspruch 1 oder 2, dadurch gekennzeichnet, daß Wachse und gegebenenfalls Weichmacher in der ersten Erwärmungsstufe und weitere Stoffe, wie insbesondere Regenerat, während der zweiten Erwärmungsstufe zugegeben werden.

4. Verfahren nach Anspruch 2 oder 3, dadurch gekennzeichnet, daß die Umschichtung und Förderung des Gutes während der zweiten Erwärmungsstufe unter Ausnutzung der Schwerkraft erfolgen.

5. Vorrichtung zur Durchführung des Verfahrens nach Anspruch 1, gekennzeichnet durch die Kombination eines Schnellmischers (1) mit schnell umlaufendem Flügel (2) mit einer liegend angeordneten Heiztrommel (6), an deren einem axialen Ende ein mit dem Auslaß des Schnellmischers (1) verbundener Einlaß und an deren anderem axialen Ende ein Auslaß ausgebildet sind.

6. Vorrichtung nach Anspruch 5, dadurch gekennzeichnet, daß die Trommelachse gegen die Horizontale geneigt ist und die Trommel (6) drehbar gelagert ist.

7. Vorrichtung nach Anspruch 5 oder 6, dadurch gekennzeichnet, daß in der Trommel (6) wenigstens eine mit der gekrümmten Trommelwand einen Ringspalt ausbildende Stauscheibe (8) angeordnet ist.

8. Vorrichtung nach Anspruch 7, dadurch gekennzeichnet, daß die Stauscheibe (8) axial verschiebbar gelagert ist.

9. Vorrichtung nach einem der Ansprüche 5 bis 8, dadurch gekennzeichnet, daß die Trommelinnenwand mit im wesentlichen axial verlaufenden Rippen (7) versehen ist.

10. Vorrichtung nach einem der Ansprüche 6 bis 9, dadurch gekennzeichnet, daß die Neigung der Trommelachse veränderbar ist.

11. Vorrichtung nach einem der Ansprüche 5 bis 10, dadurch gekennzeichnet, daß der Trommelauslaß mit dem einen Ende eines langgestreckten, mit Neigung gegen die Horizontale verlaufenden, rotierenden und temperierten Dosierrohres (20) verbunden ist, dessen anderes Ende das fertig aufbereitete Gut abgibt.

12. Vorrichtung nach einem der Ansprüche 6 bis 11, dadurch gekennzeichnet, daß die Drehzahlen von Trommel (6) und/oder Dosierrohr (20) veränderbar sind.

13. Vorrichtung nach einem der Ansprüche 5 bis 12, dadurch gekennzeichnet, daß der Trommelauslaß mit einer Dosiereinrichtung (13,14) versehen ist.

14. Vorrichtung nach Anspruch 13, dadurch gekennzeichnet, daß die Dosiereinrichtung von einem verstellbaren Auslaufspalt zwischen der Trommel und einem dieser gegenüber angeordneten Deckel (13) gebildet ist.

15. Vorrichtung nach einem der Ansprüche 11 bis 14, dadurch gekennzeichnet, daß das Dosierrohr (20) als Dosierwaage ausgebildet ist.

16. Vorrichtung nach einem der Ansprüche 11 bis 15, dadurch gekennzeichnet, daß das Dosierrohr (20) einlaufseitig mit einer Einzugsvorrichtung versehen ist.

Kö/Ro

FIG.1

0008712

2/3

FIG.2

FIG.3

FIG. 5

FIG. 4

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 1 404 967 (DRAISWERKE)<br>* Anspruch 1 *<br>-- | 1 |
| | DE - B - 1 100 935 (HENSCHEL-WERKE)<br>* Anspruch 2 *<br>-- | 1 |
| | DE - A1 - 2 410 752 (WACKER-CHEMIE)<br>* Anspruch 3 *<br>-- | 7 |
| | DE - C - 1 118 959 (DRAISWERKE)<br>* Anspruch 6 *<br>-- | 7 |
| | DE - B - 1 404 968 (DRAISWERKE)<br>* Anspruch 1 *<br>---- | 12 |

**KLASSIFIKATION DER ANMELDUNG (Int.Cl.²)**

B 29 B 1/06

**RECHERCHIERTE SACHGEBIETE (Int. Cl.³)**

B 29 B 1/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 29-11-1979 | ZAPP |

EPA form 1503.1 06.78